# EUROPEAN PATENT SPECIFICATION

(11) **EP 2 403 803 B1**
(45) Date of publication and mention of the grant of the patent: **07.05.2014**
(21) Application number: 10707008.8
(22) Date of filing: 03.03.2010
(51) Int. Cl.: C01B 33/38, C01B 37/00, C01B 37/02

(54) **ISOMORPHOUSLY SUBSTITUTED SILICATE**
ISOMORPH SUBSTITUIERTES SILICAT
SILICATE SUBSTITUÉ DE FAÇON ISOMORPHE

(30) Priority: 03.03.2009 WO PCT/CN2009/070619
(43) Date of publication of application: 11.01.2012
(73) Proprietor: BASF SE, 67056 Ludwigshafen (DE); Tokyo Institute of Technology, Tokyo 152-8550 (JP)
(72) Inventor: YILMAZ, Bilge, New York, NY 10014 (US); MÜLLER, Ulrich, 67435 Neustadt (DE); XIAO, Feng-Shou, Changchun 130023 (CN); GIES, Hermann, 45549 Sprockhövel (DE); BAO, Xinhe, Dalian 116011 (CN); DE VOS, Dirk, B-3220 Holsbeek (BE); TATSUMI, Takashi, Kawasaki 215-0021 (JP); ZHANG, Weiping, Dailian 116023 (CN)
(74) Representative: Altmann, Andreas
(86) International application number: PCT/EP2010/052699
(87) International publication number: WO 2010/100193

(56) References cited:
- EP-A2- 0 172 715
- WO-A1-03/068679
- US-A1- 2005 065 016
- US-A1- 2008 000 354
- US-A1- 2008 253 953
- US-B1- 6 756 030
- SONG J ET AL: "Zeolites synthesis in the system N(CH3)(C2H5)3F-SiO2-H2O" STUDIES IN SURFACE SCIENCE AND CATALYSIS, ELSEVIER BV, NL LNKD- DOI:10.1016/S0167-2991(04)80815-2, vol. 154, no. 1, 1 January 2004 (2004-01-01), pages 295-300, XP008126972 ISSN: 0167-2991 [retrieved on 2007-08-28] cited in the application
- MARLER B ET AL: "The structure of the new pure silica zeolite RUB-24, Si32O64, obtained by topotactic condensation of the intercalated layer silicate RUB-18star, open" MICROPOROUS AND MESOPOROUS MATERIALS, ELSEVIER SCIENCE PUBLISHING, NEW YORK, US LNKD- DOI:10.1016/J.MICROMESO.2005.04.007, vol. 83, no. 1-3, 13 June 2005 (2005-06-13), pages 201-211, XP002520805 ISSN: 1387-1811

## Description

The present invention relates to a process for the preparation of an isomorphously substituted RUB-36 silicate. Further, the present invention relates to isomorphously substituted RUB-36 silicates obtainable or obtained by this process, and to isomorphously substituted RUB-36 silicate as such. The present invention also encompasses a further step in the manufacturing process, namely the step of preparing isomorphously substituted tectosilicate RUB-37 from the layered silicate RUB-36. Additionally, the present invention also relates to the use of said materials.

The all-silica RUB-36 layered silicate, consisting of Si and O, is in principle known in the art. Reference is made, e.g., to J. Song, H. Gies; Studies in Surface Science and Catalysis, volume 15, 2004, pp.295-300.

In various technical areas, such as, for example, catalysis or adsorption, there is a constant need for new materials, in particular silicates, and new processes, respectively, allowing for manufacturing tailor-made materials for, e.g., specific catalytic or adsorption problems.

Therefore, it is an object of the present invention to provide a new process for the preparation of an isomorphously substituted layered silicate which may be employed in, for example, above-mentioned areas as such or used as precursor for the preparation of respective tectosilicates or pillared silicates. It is also an object of the present invention to provide a new layered silicate and a new tectosilicate.

Thus, the present invention relates to a process for the preparation of an isomorphously substituted RUB-36 silicate comprising
(1) providing a mixture containing silica, preferably amorphous silica, and/or at least one silica precursor, water, at least one tetraalkylammonium compound selected from the group consisting of a diethyldimethylammonium compound, a triethylmethylammonium compound, and a mixture of a diethyldimethylammonium and a triethylmethylammonium compound, optionally at least one base,
(2) heating the mixture obtained according to (1) under hydrothermal conditions to give a suspension containing an RUB-36 silicate,
(3) separating and optionally (4) washing and/or (5) drying the RUB-36 silicate from the suspension obtained according to (2),
   wherein
   (a) the mixture according to (1) contains at least one source of at least one element suitable for isomorphous substitution of at least a portion of the Si atoms in the silicate; wherein preferably
   (b) the separated and optionally washed and/or dried RUB-36 silicate according to (3) is post-treated, thereby isomorphously substituting at least a portion of the Si atoms in the silicate with at least one element suitable for isomorphous substitution.

According to the present invention, in addition to the at least one tetraalkylammonium compound, a base differing from this compound may be used. Examples of this base are ammonium hydroxide NH₄OH, alkali metal hydroxides or alkaline earth metal hydroxides, such as sodium hydroxide or potassium hydroxide, or mixtures of two or more of these compounds. In this case, the at least one tetraalkylammonium compound contains one or more suitable anions, for example halogen anions, such as fluoride or chloride or bromide or iodide.

Preferably, the at least one tetraalkylammonium compound contains the base used according to (1) as an anion. Examples of basic anions in this context include, inter alia, the hydroxide ion or aluminates. A particularly preferred basic anion is the hydroxide ion.

Therefore, the mixture provided in (1) preferably contains diethyldimethylammonium hydroxide, triethylmethylammonium hydroxide, or a mixture of diethyldimethylammonium hydroxide and triethylmethylammonium hydroxide.

Surprisingly, it was found that compared to the process for the preparation of RUB-36 as reported in the literature (J. Song, H. Gies; Studies in Surface Science and Catalysis, volume 15, 2004, pp.295-300), it is possible to prepare silicate of the present invention without the use of tetraalkylammonium fluoride, such as triethylmethylammonium fluoride which has to be prepared from the respective hydroxide and hydrofluoric acid. Obviously, it is an advantage of the present process to avoid chemical substances such as HF.

Due to this preferred embodiment, it is also preferred that the mixture according to (1) is essentially free of usual anions other than hydroxide usually employed as counter-ions for tetraalkylammonium ions. Preferably, the mixture according to (1) is essentially free of halogen ions such as bromide or fluoride. Further preferably, in particular as far as, for example, titanium or boron as suitable elements are concerned, the mixture according to (1) is essentially free of alkali metal ions and alkaline earth metal ions, such as, for example, sodium ions. The term "essentially free" as used in the context generally refers to respective contents of said mixture concerning said anions of not more than 500 ppm.

Especially preferably, the mixture provided in (1) contains only one tetraalkylammonium compound, more preferably exactly one tetraalkylammonium hydroxide, and in particular diethyldimethylammonium hydroxide.

Any suitable compound can in principle be employed as silica or a silica precursor. The term "silica precursor" as used in this context refers to a compound which, under the chosen reaction conditions, allows for the formation of the silicate structure of the layered silicate. Tetraalkoxysilanes, such as tetramethoxy silane, tetraethoxysilane or tetrapropoxysilane, may be mentioned as precursor compound by way of example. In the process of the present invention, silica as such is particularly preferably employed. By way of example, such silica sources may be fumed, amorphous silica, silica sols such as Ludox or the like. It is also conceivable that a mixture of two or more silica sources or a mixture of two or more silica precursors or a mixture of at least one silica source and at least silica precursor is employed. Amorphous silica is especially preferred. Further, amorphous silica as the only silica source is preferred.

Therefore, the present invention also relates to the process as described above, wherein amorphous silica is employed according to (1).

Generally, it is in principle possible to employ any suitable amorphous silica. Amorphous silica having a specific surface (BET, Brunauer-Emmet-Teller; determined according to DIN 66131 by nitrogen adsorption at 77 K) in the range of from 10 to 400 m²/g, preferably in the range of from 10 to 100 m²/g, and particularly preferably in the range of from 10 to 50 m²/g is preferred. Further preferred ranges are from 50 to 100 m²/g or from 100 to 300 m²/g or from 300 to 400 m²/g.

As far as above-mentioned molar ratios of silica or precursor thereof, tetraalkylammonium compound (TAA), and water are concerned, all ranges are conceivable which allow for the preparation of the silicates of the present invention. Ranges of the molar ratios of SiO₂: TAA : H₂O are preferred which are within 1 : (0.3-0.7) : (0.1-30), more preferably within 1: (0.4-0.6) : (0.2-25), and even more preferably 1 : (0.45-0.55) : (0.5-20), especially preferably of 1 : (0.48-0.52): (0.75-17.5), in particular 1: (0.49-0.51): (1-16).

Therefore, the present invention also relates to the process as described above, wherein the mixture obtained according to (1) contains SiO₂, or the silica precursor calculated as SiO₂, the at least one tetraalkylammonium compound and water in the molar ratios SiO₂: tetraalkylammonium compound : water of 1 : (0.45-0.55) : (0.5-20), preferably 1 : (0.49-0.51): (1-16).

According to a further preferred embodiment of the present invention, at least one seeding material is contained in the mixture according to (1) as crystallization auxiliary. As seeding material, all compounds are conceivable resulting in the desired silicate. For the synthesis of a the layered silicate RUB-36, it is preferred to add, as seed material, the RUB-36 silicate and/or the tectosilicate RUB-37 obtained from this layered silicate by a process as described hereinunder. It is especially preferred to add, as seed material, the layered silicate RUB-36. Generally, it is possible to add the isomorphously substituted silicate as seeding material. It is preferred to add the all-silica silicate as seeding materials. Therefore, it is especially preferred to add all-silica RUB-36 as seeding material.

Thus, the present invention also relates to the process as described above, wherein the mixture obtained according to (1) contains at least one suitable seeding material, preferably RUB-36 seed crystals, more preferably all-silica RUB-36 seed crystals.

Typical concentrations of the seeding materials are in the range of from 0.001 to 5% by weight of seeding material, based on the silica and/or silica precursor calculated as silica, present in the mixture according to (1). Preferably, the mixture obtained according to (1) contains SiO₂ and/or the silica precursor calculated as SiO₂, and the seed material in a weight ratio of 1 : (0.01-0.2), preferably of 1: (0.02-0.1).

According to the present invention, the mixture according to (1) additionally contains at least one source of at least one element suitable for isomorphous substitution of at least a portion of the Si atoms in the silicate which results from hydrothermal crystallization according to (2). According to this embodiment, during hydrothermal crystallization, the at least one element is incorporated into the silicate framework at positions where Si would be placed in the respective all-silica silicate. The term "all-silica silicate" relates to silicates which, apart from unintentionally introduced impurities, consists of Si and O.

Preferred suitable elements according to the present invention are selected from the group consisting of Al, B, Fe, Ti, Sn, Ga, Ge, Zr, V, Nb, and a mixture of two or more thereof. Due to the presence of the at least one source of the at least one suitable element, the silicate structure which is formed during hydrothermal crystallization contains not only Si atoms, but also, as isomorphous substitution of Si atoms, at least one of the suitable elements.

More preferably, the suitable elements are selected from the group consisting of Al, B, Ti, and a mixture of two or more thereof. Even more preferably, the suitable element is either Ti or B or Al.

If, for example, aluminum is incorporated as suitable element for isomorphous substitution, it is possible to use, for example, metallic aluminum or suitable aluminates, such as alkali metal aluminates, and/or aluminum alcoholates, such as aluminum triisopropylate, as suitable sources.

If, for example, boron is incorporated, it is possible to use, for example, free boric acid and/or borates and/or boric esters, such as triethyl borate, as suitable sources. Therefore, the present invention also relates to the process as described above, wherein the source of B is H₃BO₃.

If, for example, titanium is incorporated, it is possible to use, for example, titanium alcoholates, such as titanium ethanolates and/or titanium propylates and/or titanium butylates, as suitable sources. Therefore, the present invention also relates to the process as described above, wherein the source of Ti is a tetraalkyl-orthotitanate or a mixture of two or more tetraalkylorthotitanate, said tetraalkylorthotitanate preferably being selected from the group consisting of tetraethylorthotitanate, tetrapropylorthotitanate, tetrabutlyorthotitanate, and a mixture of two or three thereof. Especially preferred is tetrabutylorthotitanate.

If, for example, tin is incorporated, it is possible to use, for example, tin chlorides and/or organometallic tin compounds, such as tin alcoholates, or chelates, such as tin acetylacetonates, in addition to the tetraalkylammonium compound and the silica and/or silica precursor as starting materials.

If, for example, zirconium is incorporated, it is possible to use, for example, zirconium chloride and/or zirconium alcoholates in addition to the tetraalkylammonium compound and the silica and/or silica precursor as starting materials.

If, for example, vanadium or germanium or niobium is incorporated, it is possible to use, for example, vanadium chloride or germanium chloride or niobium chloride in addition to the tetraalkylammonium compound and the silica and/or silica precursor as starting materials.

The amount of the at least one source of the at least one element suitable for isomorphous substitution added in (1) can be chosen depending on the desired characteristics of the substituted RUB-36 material. Preferably, the molar ratios of SiO₂, or the silica precursor calculated as SiO₂, in the reaction mixture according to (1) and the at least one element suitable for isomorphous substitution (1) are 1: (0.0001- 0.1), more preferably 1: (0.001- 0.05), and especially preferably 1: (0.005 - 0.02).

According to a further embodiment of the present invention, the mixture according to (1) additionally contains hydrogen peroxide. This is especially preferred if titanium is employed as suitable element for isomorphous substitution.

The amounts of hydrogen peroxide used can be chosen according to the respective needs. Generally, the molar ratio of the at least one source of the at least one suitable element, preferably titanium : hydrogen peroxide is in the range of from 0.001 to 0.1, preferably from 0.002 to 0.05. Especially preferably, the molar ratio is from 0.005 to 0.01.

Therefore, the present invention also relates to the process as described above, wherein the at least one element suitable for isomorphous substitution is Ti, and wherein the molar ratio of the at least one source of Ti : hydrogen peroxide is in the range of from 0.005 to 0.01.

Generally, the mixture according to (1) may have any suitable pH, wherein a pH ranging from 7 to 14 is preferred. More preferably, the pH of said mixture is in the range of from 9 to 14, even more preferably between 10 and 13.5, and most preferably between 11 and 13. In particularly preferred embodiments, the pH of the mixture according to (1) is between 11.5 and 12.5, more preferably between 11.8 and 12.2.

In step (1) of the process of the present invention, a mixture is provided which is subjected to hydrothermal crystallization in step (2). In general, it is possible to mix the individual starting materials in every conceivable order. Preferably, the silica or precursor thereof is first admixed with an aqueous mixture containing the tetraalkylammonium compound. Preferably, the resulting mixture is stirred for a certain period of time, such as, for example, from 5 minutes to 5 hours, preferably from 15 minutes to 1 h. Then, it is preferred to add the at least one source of the at least one suitable element for isomorphous substitution. Again, the resulting mixture is stirred for a certain period of time, such as, for example, from 5 minutes to 5 hours, preferably from 30 minutes to 2 hours. If, according to a preferred embodiment of the present invention as described above, a suitable seeding material is added, it is preferred to add it to the mixture of silica or precursor thereof and the tetraalkylammonium compound, prior to the addition of the at least one source of the at least one suitable element.

According to an especially preferred process of the present invention, if titanium is used as element suitable for isomorphous substitution, the at least one source of titanium is pre-mixed with hydrogen peroxide, and the resulting mixture is added as described above for the at least one source of the at least one suitable element for isomorphous substitution.

The temperature during the preparation of the mixture according to (1) is preferably in the range of from 10 to 40 °C, more preferably in the range of from 15 to 35 °C, and particularly preferably in the range of from 20 to 30 °C.

Depending on the desired molar ratios of the starting materials, it is possible to either suitably remove or add a suitable amount of water. Removal of water may be achieved, for example, by carefully heating the mixture or using a rotary evaporator. The water is removed preferably at a temperature in the range of from 60 to 85 °C, more preferably of from 65 to 80°C, and particularly preferably of from 65 to 75 °C. If water is added or removed, it is preferred that the resulting mixture is stirred for 0.1 to 5 h, preferably from 0.2 to 1 h.

Generally, the stirring periods will also depend on the actual amount of starting materials. Thus, it is conceivable that for laboratory-scale manufacturing process, the stirring periods will be shorter than for an industrial-scale manufacturing process. The stirring periods described above preferably describe a laboratory-scale manufacturing process.

The resulting mixture is then subjected to hydrothermal crystallization in step (2). Preferably, the mixture is transferred in an autoclave. For adjusting the temperature of the crystallization to one or more desired temperatures, it is further preferred to use an autoclave which is equipped with heating and/or cooling means such as, e.g., internal and/or external heating and/or cooling means such as, e.g., a heating and/or cooling jacket. It is also possible to transfer the autoclave into an environment such as an oven, e.g. a circulating air oven, or the like which allows for maintaining a desired temperature in the synthesis mixture.

The synthesis mixture is preferably suitably stirred for the crystallization according to (2). It is also possible to rotate the reaction vessel in which the crystallization is carried out.

As far as the crystallization temperature is concerned, a temperature in the range of from 125 to 155 °C, more preferably from 130 to 150 °C, and even more preferably from 135 to 145 °C are used. In particular, the temperature is in the range of from 138 to 142 °C.

Therefore, the present invention also relates to the process as described above, wherein the mixture is heated according to (2) to a temperature in the range of from 135 to 145 °C.

Surprisingly, it was found that the preferred temperatures of from 135 to 145 °C needed to crystallize the inventive silicates is lower, in specific cases substantially lower than the temperature described in the literature which is 443 K and 488 K, respectively.

Also two or more different temperatures may be used during the crystallization in (2). In this context, it is possible to adjust the temperature to a certain value in the above-mentioned ranges, maintaining this temperature for a certain period of time, and then to increase or decrease the temperature to another value within above-mentioned ranges. Contrary or in addition to this stepwise adjustment of the temperature, the crystallization temperature may be gradually decreased or increased during hydrothermal crystallization. In general, the applied heating rates, either as far as heating the mixture according to (1) the crystallization temperature and/or as far as heating the mixture during (2) is/are concerned, can be suitably chosen. Preferably, the heating rates are in the range of from 0.1 °C/min to 20 °C/min, preferably from 0.3 °C/min to 15 °C/min and in particular from 0.5 °C/min to 10 °C/min.

As far as hydrothermal crystallization according to (2) is concerned, it is further preferred to maintain the crystallization temperature in step (2) for a period in the range of from 1 to 18 days, more preferably from 4 to 17 days and even more preferably from 7 to 15 days.

According to an embodiment of the process of the present invention, the crystallization according to (2) can be stopped by suitable quenching. Here, it is particularly preferred to add water to the suspension, said water being at a temperature which is suitable for stopping the crystallization.

Thus, the present invention also relates to the RUB-36 silicate obtainable or obtained by the process consisting of steps (1) and (2), namely the isomorphously substituted RUB-36 silicate comprised in its mother liquor.

According to the process of the present invention, the layered silicate RUB-36 contained in its mother liquor, obtained after hydrothermal crystallization, is separated off in a suitable manner in at least one step from the suspension obtained from (2). This separation can be effected, for example, by means of filtration, ultrafiltration, diafiltration or centrifuging methods or, for example, spray drying and spray granulation methods. Separation by means of spray drying or filtration is preferred.

Thus, the present invention also relates to the RUB-36 silicate obtainable or obtained by the process consisting of steps (1) and (2) and (3), namely the assynthesized isomorphously substituted RUB-36 silicate which still contains at least a portion of the structure directing agent employed in (1).

According to a preferred embodiment of the process of the present invention, the at least one silicate separated off as described above is washed and/or dried.

Accordingly, the present invention also relates a process as described above, additionally comprising
(4) washing
   and/or
(5) drying
   of the silicate obtained according to (3).

The separation can be followed by at least one washing step and/or at least one drying step, wherein it is possible to use identical or different washing agents or washing agent mixtures in at least two washing steps and to use identical or different drying temperatures in at least two drying steps.

If at least one washing step is conducted, it is preferred to wash the separated silicate until the pH of the washwater is in the range of from 6 to 8, preferably from 6.5 to 7.5, as determined via a standard glass electrode.

The drying temperatures here are preferably in the range of from room temperature to 180 °C, more preferably of from 55 to 165 °C, more preferably of from 65 to 150 °C, and particularly preferably in the range of from 75 to 125 °C.

Accordingly, the present invention also relates a process as described above, additionally comprising
(4) washing, preferably to a pH in the range of from 6.5 to 7.5, of the separated silicate, and/or
(5) drying, preferably at a temperature in the range of from 75 to 125 °C, of the separated and optionally washed silicate.

Washing agents which may be used are, for example, water, alcohols, such as methanol, ethanol or propanol, or mixtures of two or more thereof. Examples of mixtures are mixtures of two or more alcohols, such as methanol and ethanol or methanol and propanol or ethanol and propanol or methanol and ethanol and propanol, or mixtures of water and at least one alcohol, such as water and methanol or water and ethanol or water and propanol or water and methanol and ethanol or water and methanol and propanol or water and ethanol and propanol or water and methanol and ethanol and propanol. Water or a mixture of water and at least one alcohol, preferably water and ethanol, is preferred, water being very particularly preferred as the only washing agent.

Thus, the present invention also relates to the isomorphously substituted RUB-36 silicate obtainable or obtained by the process consisting of steps (1), (2), (3), and (4) and/or (5).

As described above, the at least one source of the at least one element suitable for isomorphous substitution is added to the mixture according to (1). This embodiment according to alternative (a) is especially preferred in the context of the present invention. Surprisingly, it was found that the isomorphous substitution of at least a portion of the Si atoms in the silicate obtained from hydrothermal crystallization can be achieved by such easy "one-pot synthesis" of isomorphously substituted RUB-36 silicates.

However, according to the present invention, it is also possible to prepare an all-silica RUB-36 silicate according to steps (1) and (2) and suitably post-treat the thus obtained silicate, thereby isomorphously substituting at least a portion of the Si atoms of the silicate structure. Even more preferably, according to alternative (b), it is possible to prepare an all-silica RUB-36 silicate according to steps (1) and (2) and (3), and optionally also (4) and/or (5), and suitably post-treat the thus obtained silicate, thereby isomorphously substituting at least a portion of the Si atoms of the silicate structure. Also in this case, preferred suitable elements according to the present invention are selected from the group consisting of Al, B, Fe, Ti, Sn, Ga, Ge, Zr, V, Nb, and a mixture of two or more thereof. More preferably, the suitable elements are selected from the group consisting of Al, B, Ti, and a mixture of two or more thereof. Even more preferably, the suitable element is Ti or B or Al.

Therefore, the present invention also relates to the process as described above, wherein the RUB-36 silicate according to (3) is post-treated, said post-treatment being conducted directly after separating and optional washing and/or drying.

According to a further alternative encompassed by the present invention, an isomorphously substituted RUB-36 silicate can be prepared according to alternative (a), and the thus obtained isomorphously substituted RUB-36 can be subjected to a post-treatment according to alternative (b). Thus, in (a), at least one first suitable element can be introduced in the RUB-36 silicate whereas in (b), at least one second suitable element being the same as or different from the at least one first suitable element is introduced in the RUB-36 silicate.

The most preferred process of the present invention necessarily includes alternative (a), the "one-pot synthesis", either with or without subsequent post-treatment according to alternative (b).

Therefore, the present invention generally relates to an isomorphously substituted RUB-36 silicate obtainable or obtained by any of the process of the present invention as described above, in particular obtainable or obtained by any one of the processes of the present invention as described above which includes the "one-pot synthesis" according to alternative (a).

Also, the present invention relates to an RUB-36 silicate as such, wherein at least a portion of the Si atoms in the silicate is isomorphously substituted by at least one suitable element, wherein the at least one suitable element is preferably selected from the group consisting of Al, B, Fe, Ti, Sn, Ga, Ge, Zr, V, Nb and a mixture of two ore more thereof, more preferably Ti, B, Al and a mixture of two or more thereof, even more preferably Ti or B or Al. Preferably, the RUB-36 silicate of the present invention exhibits an atomic ratio of Si : suitable element, preferably Ti or B or Al in the layered silicate which is in the range of 1 : (0.0001- 0.1), more preferably of 1: (0.001- 0.05), and even more preferably of 1: (0.005 - 0.02).

The RUB-36 silicate of the present invention preferably exhibits an X-ray diffraction pattern which comprises at least the following reflections:

| Diffraction angle 2θ/° [Cu K(alpha 1)] | Intensity (%) |
|---|---|
| 7.85 - 8.05 | 100.0 |
| 17.04 - 17.24 | 1.6 - 5.6 |
| 20.26 - 20.46 | 1.7 - 5.7 |
| 23.89 - 24.09 | 4.2 - 12.2 |
| 24.73 - 24.93 | 4.8 - 12.8 |
| 25.30 - 25.50 | 2.6 - 6.6 |
| 26.52 - 26.72 | 0.7 - 4.7 |

wherein 100% relates to the intensity of the maximum peak in the X-ray diffraction pattern.

In particular, if, for example, the at least one suitable element is titanium (Ti-RUB-36), the RUB-36 silicate of the present invention, preferably exhibits an X-ray diffraction pattern which comprises at least the following reflections:

| Diffraction angle 2θ/° [Cu K(alpha 1)] | Intensity (%) |
|---|---|
| 7.95 | 100.0 |
| 17.14 | 3.6 |
| 20.36 | 3.7 |
| 23.99 | 8.2 |
| 24.83 | 8.8 |
| 25.40 | 4.6 |
| 26.62 | 2.7 |

According to a further embodiment of the process of the present invention, the layered silicate RUB-36 obtained according to (3) is calcined according to (6) in at least one additional step. It is in principle possible to subject the suspension comprising the layered silicate RUB-36, i.e. the mother liquor containing the layered silicate, directly to calcination. Preferably, the silicate is separated off from the suspension, as described above according to (3), prior to the calcination. Prior to the calcination, the silicate separated off from the suspension can be subjected to at least one washing step (4) as described above and/or at least one drying step (5) as described above.

The calcination according to (6) of the silicate obtained according to (2) and/or (3) and/or (4) and/or (5) is preferably effected at a temperature in the range of up to 700 °C to give an isomorphously substituted tectosilicate RUB-37. More preferably, the calcination temperatures are in the range of from 300 to 700 °C, even more preferably of from 400 to 600 °C.

Thereby, according to a preferred embodiment of the process of the present invention, the heating of the layered silicate is carried out from room temperature to a temperature of up to 700 °C, the heating rate further preferably being in the range of from 0.1 to 20 °C/min, more preferably of from 0.2 to 10 °C/min, and particularly preferably in the range of from 0.5 to 5 °C/min.

According to a possible embodiment of the process of the present invention, the calcination is carried out stepwise at successive temperatures. The term "stepwise at successive temperatures" as used in the context of the present invention refers to a calcination in which the silicate to be calcined is heated to a certain temperature, is kept at this temperature for a certain time, and is heated from this temperature to at least one further temperature and is once again kept there for a certain time. If stepwise calcination is carried out, the silicate to be calcined is preferably kept at up to 4, more preferably at up to 3, particularly preferably at 2 temperatures.

The calcination can be effected in any suitable atmosphere, for example air, lean air, nitrogen, steam, synthetic air or carbon dioxide. The calcination is preferably effected under air.

The calcination can be carried out in any apparatus suitable for this purpose. The calcination is preferably effected in a rotating tube, in a belt calciner, in a muffle furnace, or in situ in an apparatus in which the silicate is subsequently used for the intended purpose, for example as a molecular sieve or for another application described below. A rotating tube and a belt calciner are particularly preferred here.

Accordingly, the present invention also relates to a process as described above, additionally comprising
(6) calcining the silicate obtained according to (3) or (4) or (5), preferably at a temperature in the range of from 300 to 700 °C, more preferably 400 to 600 °C.

After calcination, according to a further conceivable embodiment, the present invention also relates to a process as described above which additionally comprises suitable post-treating the calcined silicate, thereby isomorphously substituting at least a portion of the Si atoms in the calcined silicate with at least one suitable element. Preferred suitable elements are selected from the group consisting of Al, B, Fe, Ti, Sn, Ga, Ge, Zr, V, Nb, and mixtures of two or more thereof, more preferably Ti, Al, B and a mixture of two or more thereof, even more preferably Ti or Al or B. Such post-treatment of the calcined silicate can be carried out regardless whether or not the layered silicate, prior to calcinations, is an already isomorphously substituted layered silicate. Depending on the type of atoms which are incorporated into the lattice, a negatively charged framework which makes it possible, for example, to load the silicate with cations may form. Inter alia, the ammonium ions tetraakylammonium of the structure directing agents, platinum, palladium, rhodium or ruthenium cations, gold cations, alkali metal cations, for example sodium or potassium ions, or alkaline earth metal cations, for example magnesium or calcium ions, may be mentioned as such.

The present invention accordingly also relates to a silicate, in particular an isomorphously substituted RUB-37 silicate, obtainable or obtained by the process as described above, comprising the calcination according to (6).

Also, the present invention relates to an RUB-37 silicate as such, wherein at least a portion of the Si atoms in the silicate is isomorphously substituted by at least one suitable element, wherein the at least one suitable element is preferably selected from the group consisting of Al, B, Fe, Ti, Sn, Ga, Ge, Zr, V, Nb and a mixture of two ore more thereof, more preferably from the group consisting of Ti, Al, B and a mixture of two or more thereof, even more preferably Ti or Al or B.

Preferably, the RUB-37 silicate of the present invention exhibits an atomic ratio of Si : suitable element, preferably Ti or B or Al in the layered silicate which is in the range of 1 : (0.0001- 0.1), more preferably of 1: (0.001- 0.05), and even more preferably of 1 : (0.005 - 0.02).

The RUB-37 silicate of the present invention preferably exhibits an X-ray diffraction pattern which comprises at least the following reflections:

| Diffraction angle 2θ/° [Cu K(alpha 1)] | Intensity (%) |
|---|---|
| 9.60 - 9.70 | 100.0 |
| 12.85 - 13.05 | 0.5 - 10 |
| 19.30 - 19.50 | 0.5 - 10 |
| 20.35 - 20.55 | 1 - 11 |
| 23.23 - 23.43 | 0.5 - 10 |
| 25.93 - 26.13 | 0.5 - 10 |
| 27.06 - 27.26 | 0.5 - 10 |

wherein 100% relates to the intensity of the maximum peak in the X-ray diffraction pattern.

In particular, if, for example, the at least one suitable element is titanium (Ti-RUB-37), the RUB-37 silicate of the present invention preferably exhibits an X-ray diffraction pattern which comprises at least the following reflections:

| Diffraction angle 2θ/° [Cu K(alpha 1)] | Intensity (%) |
|---|---|
| 9.70 | 100.0 |
| 12.95 | 4.0 |
| 19.40 | 4.3 |
| 20.45 | 5.4 |
| 23.33 | 4.1 |
| 26.03 | 4.3 |
| 27.16 | 3.9 |

It may be mentioned that it may be possible to carry out neither the "one-pot synthesis" according to alternative (a) nor the post-treatment according to alternative (b), and to post-treat only the RUB-37 silicate thereby isomorphously substituting at least a portion of the Si atoms of the RUB-37 tectosilicate structure.

Preferably, the isomorphously substituted RUB-37 silicate of the present invention exhibits a BET surface area in the range of from 150 to 500 m²/g, determined according to DIN 66135, more preferably of from 200 to 400 m²/g, more preferably of from 250 to 350 m²/g.

In many technical applications, the user often desires to employ the isomorphously substituted RUB-36 and/or the the isomorphously substituted RUB-37 which has been processed to moldings, instead of the silicate material as such. Such moldings are necessary in particular in many industrial processes, in order, for example, to be able to expediently operate separations of substances from mixtures in, for example, tube reactors.

The present invention accordingly also relates to a molding comprising the isomorphously substituted RUB-36 and/or the isomorphously substituted RUB-37 described above. The present invention also relates to moldings comprising the only the isomorphously substituted RUB-36 described above.

In general, the molding may comprise all conceivable further compounds in addition to the isomorphously substituted RUB-36 and/or the isomorphously substituted RUB-37 of the present invention, provided that it is ensured that the resulting molding is suitable for the desired application.

In the context of the present invention, it is preferred if at least one suitable binder material is used in the production of the molding. In the context of this preferred embodiment, more preferably a mixture of RUB-36 and RUB-37 and the at least one binder is prepared. Suitable binders are in general all compounds which impart adhesion and/or cohesion between the particles of the RUB-36 and/or RUB-37 which are to be bound, over and above the physisorption which may be present without a binder. Examples of such binders are metal oxides, such as SiO₂, Al₂O₃, TiO₂, ZrO₂ or MgO, or clays or mixtures of two or more of these compounds. As Al₂O₃ binders, clay minerals and naturally occurring or synthetic aluminas, for example alpha-, beta-, gamma-, delta-, eta-, kappa-, chi- or theta-alumina and the inorganic or organometallic precursor compounds thereof, such as gibbsite, bayerite, boehmite, pseudoboehmite or trialkoxyaluminates, such as aluminum triisopropylate are preferred in particular. Further preferred binders are amphiphilic compounds having a polar and a nonpolar moiety, and graphite. Further binders are, for example, clays, such as montmorillonites, kaolins, bentonites, halloysites, dickites, nacrites or anaxites. These binders can be used as such. In the context of the present invention, it is also possible to use compounds from which the binder is formed in at least one further step in the production of the moldings. Examples of such binder precursors are tetraalkoxysilanes, tetraalkoxytitanates, tetraalkoxyzirconates or a mixture of two or more different tetraalkoxysilanes or a mixture of two or more different tetraalkoxytitanates or a mixture of two or more different tetraalkoxyzirconates or a mixture of at least one tetraalkoxysilane and at least one tetraalkoxytitanate or of at least one tetraalkoxysilane and at least one tetraalkoxyzirconate or of at least one tetraalkoxytitanate and at least one tetraalkoxyzirconate or a mixture of at least one tetraalkoxysilane and at least one tetraalkoxytitanate and at least one tetraalkoxyzirconate. In the context of the present invention, binders which either completely or partly consist of SiO₂ or are a precursor of SiO₂, from which SiO₂ is formed in at least one further step in the production of the moldings are to be mentioned. In this context, both colloidal silica and "wet process" silica as well as "dry process" silica can be used. These are very particularly preferably amorphous silica, the size of the silica particles being, for example, in the range of from 5 to 100 nm and the surface of the silica particles being in the range of from 50 to 500 m²/g. Colloidal silica, preferably in the form of an alkaline and/or ammoniacal solution, more preferably in the form of an ammoniacal solution, is, for example, commercially available as, inter alia, Ludox®, Syton®, Nalco® or Snowtex®. "Wet process" silica is, for example, commercially available, inter alia, as Hi-Sil®, Ultrasil®, Vulcasil®, Santocel®, Valron-Estersil®, Tokusil® or Nipsil®. "Dry process" silica is, for example, commercially available, inter alia, as Aerosil®, Reolosil®, Cab-O-Sil®, Fransil® or ArcSilica®. The binders are preferably used in an amount which leads to the finally resulting moldings whose binder content is up to 80 % by weight, more preferably in the range of from 5 to 80 % by weight, more preferably in the range of from 10 to 70 % by weight, more preferably in the range of from 10 to 60 % by weight, more preferably in the range of from 15 to 50 % by weight, more preferably in the range of from 15 to 45 % by weight, particularly preferably in the range of from 15 to 40 % by weight, based in each case on the total weight of the finally resulting molding. The term "finally resulting molding" as used in the context of the present invention relates to a molding as obtained from the drying and calcining steps (IV) and/or (V), as described below, particularly preferably obtained from (V).

The mixture of binder or precursor of a binder and the RUB-36 and/or the RUB-37 material can be mixed with at least one further compound for further processing and for the formation of a plastic material. Here, inter alia, pore formers may preferably be mentioned. In the process of the present invention, all compounds which, with regard to the finished molding, provide a certain pore size and/or a certain pore size distribution and/or certain pore volumes can be used as pore formers. Preferably used pore formers in the process of the present invention are polymers which are dispersible, suspendable or emulsifiable in water or in aqueous solvent mixtures. Preferred polymers here are polymeric vinyl compounds, for example polyalkylene oxides, such as polyethylene oxides, polystyrene, polyacrylates, polymethacrylates, polyolefins, polyamides and polyesters, carbohydrates, such as cellulose or cellulose derivatives, for example methylcellulose, or sugars or natural fibers. Further suitable pore formers are, for example, pulp or graphite. If pore formers are used in the preparation of the mixture according to (I), the pore former content, preferably the polymer content of the mixture according to (I) is preferably in the range of from 5 to 90 % by weight, preferably in the range of from 15 to 75 % by weight, and particularly preferably in the range of from 25 to 55 % by weight, based in each case on the amount of RUB-36 and/or RUB-37 in the mixture according to (I). If desired for the pore size distribution to be achieved, a mixture of two or more pore formers may also be used. In a particularly preferred embodiment of the process of the present invention, as described below, the pore formers are removed in a step (V) by calcination to give the porous molding.

In the context of a likewise preferred embodiment of the present invention, at least one pasting agent is added in the preparation of the mixture according to (I). Pasting agents which may be used are all compounds suitable for this purpose. These are preferably organic, in particular hydrophilic polymers, for example cellulose, cellulose derivatives, such as methylcellulose, starch, such as potato starch, wallpaper paste, polyacrylates, polymethacrylates, polyvinyl alcohol, polyvinylpyrrolidone, polyisobutene or polytetrahydrofuran. Accordingly, particular compounds which also act as pore formers can be used as pasting agents. In a particularly preferred embodiment of the process of the present invention as described below, these pasting agents are removed in a step (V) by calcination to give the porous molding.

According to a further embodiment of the present invention, at least one acidic additive may added during the preparation of the mixture according to (I). Organic acidic compounds which can be removed in the preferred step (V), as described below, by calcination are very particularly preferred. Carboxylic acids, for example formic acid, oxalic acid and/or citric acid, are particularly preferred. It is also possible to use two or more of these acidic compounds.

The order of addition of the components of the mixture according to (I) which contains the RUB-36 and/or the RUB-37 is not critical. It is both possible first to add the at least one binder, then the at least one pore former and the at least one acidic compound and finally the at least one pasting agent and to interchange the sequence with regard to the at least one binder, the at least one pore former, the at least one acidic compound and the at least one pasting agent.

After the addition of the binder to the RUB-36 and/or the RUB-37, to which, if appropriate, at least one of the compounds described above have already been added, the mixture according to (I) is, as a rule, homogenized for from 10 to 180 minutes. Inter alia, kneaders, edge mills or extruders are particularly preferably used for the homogenization. The mixture is preferably kneaded. On the industrial scale, treatment in an edge mill is preferably employed for the homogenization. The homogenization is carried out as a rule at temperatures in the range of from about 10 °C to the boiling point of the pasting agent and normal pressure or slightly superatmospheric pressure. Thereafter, if appropriate, at least one of the compounds described above can be added. The mixture thus obtained is homogenized, preferably kneaded, until an extrudable plastic material has formed.

According to a more preferred embodiment of the invention, the homogenized mixture is molded. In the context of the present invention, those processes in which the molding is effected by extrusion in conventional extruders, for example to give extrudates having a diameter of preferably from 1 to 10 mm, particularly preferably from 2 to 5 mm, are preferred for the shaping processes. Such extrusion apparatuses are described, for example, in Ullmann's Enzyklopädie der Technischen Chemie, 4th Edition, Vol. 2, page 295 et seq., 1972. In addition to the use of a screw-type extruder, a plunger-type extruder is also preferably used for the molding. In principle, however, all known and/or suitable kneading and molding apparatuses and processes may be used for the shaping. Examples of these are inter alia: briquetting, i.e. mechanical compression with or without addition of additional binder material; pelleting, i.e. compacting by circular and/or rotational movements; sintering, i.e. the material to be molded is subjected to a thermal treatment. The shape of the moldings produced according to the invention can be chosen as desired. In particular, inter alia spheres, oval shapes, cylinders or tablets are possible.

In the context of the present invention, step (III) is preferably followed by at least one drying step.

In the context of the present invention, the step (IV) is preferably followed by at least one calcination step. The calcination is carried out at temperatures in the range of, in general, from 300 to 700 °C, preferably from 400 to 600 °C. The calcination can be effected under any suitable gas atmosphere, air and/or lean air being preferred. Furthermore, the calcination is preferably carried out in a muffle furnace, a rotary kiln and/or a belt calcination oven. It is possible for the temperatures during a calcination step to remain constant or to be changed continuously or discontinuously. If calcination is effected twice or more often, the calcination temperatures can be different or identical in the individual steps.

Accordingly, the present invention also relates to a process for the production of a molding as described above, comprising the steps
(I) preparing of a mixture containing the isomorphously substituted RUB-36 silicate and/or the isomorphously substituted RUB-37 silicate as described above, and optionally at least one binder;
(II) kneading of the mixture;
(III) molding of the kneaded mixture to give at least one molding;
(IV) drying of the at least one molding;
(V) calcining of the at least one dried molding.

Before and/or after the drying and/or before and/or after the calcination, the at least one molding can, if appropriate, be treated with a concentrated or dilute Broenstedt acid or a mixture of two or more Broenstedt acids. Suitable acids are, for example, hydrochloric acid, sulfuric acid, phosphoric acid, nitric acid or carboxylic acids, dicarboxylic acids or oligo- or polycarboxylic acids, such as nitrilotriacetic acid, sulfosalicylic acid or ethylenediaminetetraacetic acid. If appropriate, this at least one treatment with at least one Broenstedt acid is followed by at least one drying step and/or at least one calcination step, which in each case is carried out under the conditions described above.

According to a further embodiment of the process of the present invention, the moldings obtained according to the invention can, for better hardening, be subjected to a water steam treatment, after which preferably drying is effected at least once again and/or calcination is effected at least once again. For example, after at least one drying step and at least one subsequent calcination step, the calcined molding is subjected to the steam treatment and is then dried at least once again and/or calcined at least once again.

The present invention moreover relates to the use of the isomorphously substituted RUB-36 and/or the isomorphously substituted RUB-37 of the present invention, and/or of the moldings of the invention, as a molecular sieve, catalyst, catalyst support or binder thereof, as adsorbents, pigments, additives in detergents, an additive for building materials, for imparting thixotropic properties to coating pastes and finishes, and applications as external and internal lubricant, as flameproofing agent, auxiliary agent and filler in paper products, in bactericidal and/or fungicidal and/or herbicidal compositions, for ion exchange, for the production of ceramics, in polymers, in electrical, optical or electrooptical components and switching elements or sensors.

Preferably, the isomorphously substituted RUB-36 and/or the isomorphously substituted RUB-37 of the present invention, and/or of the moldings of the invention may be used as a catalyst, a catalyst support or binder thereof, an adsorbent, for ion exchange, for the production of ceramics, or in polymers.

Further, the isomorphously substituted RUB-36 may be used as starting materials for the manufacturing of pillard silicates.

The present invention is explained in more detail with reference to the examples and the figure described below.

### Description of the figures

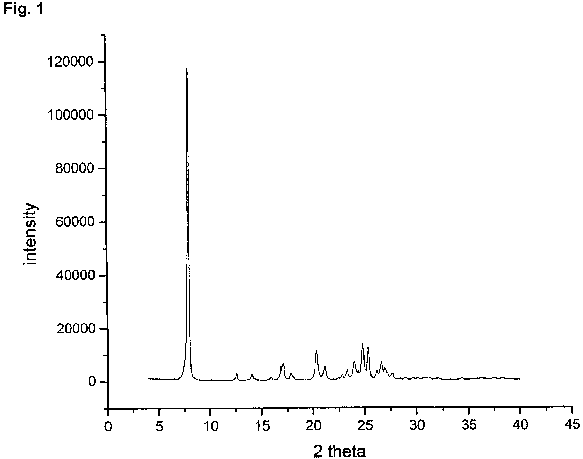

- Figure 1: shows the X-ray diffraction pattern of the dried layered silicate Ti-RUB-36 obtained according to Example 1.

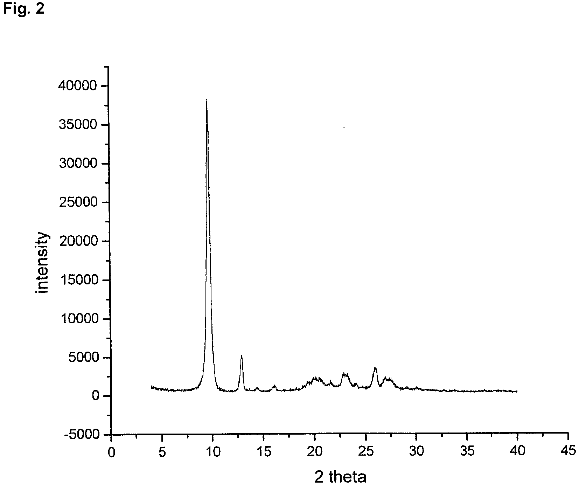

- Figure 2: shows the X-ray diffraction pattern of the calcined tectosilicate product Ti-RUB-37 according to Example 2.

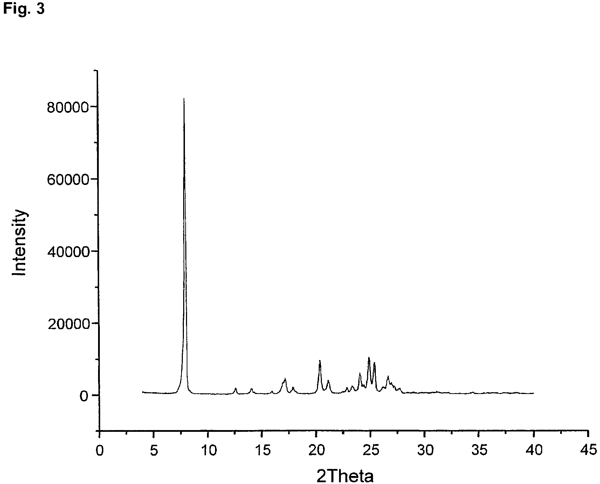

- Figure 3: shows the X-ray diffraction pattern of the dried layered silicate B-RUB-36 obtained according to Example 3.

All powder X-ray diffraction patterns were recorded on a Siemens D-5000 with monochromatic Cu K alpha-1 radiation, a capillary sample holder being used in order to avoid a preferred orientation. The diffraction data were collected using a position-sensitive detector from Braun, in the range from 8 to 96 ° (2 theta) and with a step width of 0.0678°. Indexing of the powder diagram was effected using the program Treor90, implemented in powder-X (Treor90 is a public domain program which is freely accessible via the URL http://www.ch.iucr.org/sincris-top/logiciel/). In the figures, the angle 2 theta in ° is shown along the abscissa and the intensities are plotted along the ordinate.

### Examples

### Example 1: Preparation of RUB-36 isomorphously substituted with titanium

349.8 g of aqueous diethyldimethylammonium hydroxide (20.62 wt.-%) solution were weighed into a beaker, to which 72.7 g of amorphous silica (Aerosil®) were added in portions and the mixture was stirred for 30 min. 3.6 g of RUB-36 were then added as seed crystals and the mixture was then stirred for 1 h.

In a second beaker, 2.8 g of tetrabutylorthotitanate were dissolved in 111 ml of an aqueous solution of hydrogen peroxide (30-wt.%) to give a clear orange solution. Said solution was then added to the first mixture, and the resulting mixture was stirred for 1 h. Subsequently, 94.2 g of water are removed from said mixture using a rotary evaporator, and the concentrated mixture was stirred for 30 min. 168.1 g of the resulting light green suspension (pH = 12) were then weighed into a pressure digestion vessel and then heated therein under hydrothermal conditions at 140 °C for 288 h.

The resulting product was then suction filtered, washed with distillated water, and dried at 100 °C for 16 h, affording a white powder.

**Table 1: X-ray diffraction pattern of RUB-36**

| Diffraction angle 2θ/° [Cu K(alpha 1)] | Intensity (%) |
|---|---|
| 7.95 | 100.0 |
| 12.62 | 0.6 |
| 14.11 | 0.5 |
| 15.92 | 1.3 |
| 17.14 | 3.6 |
| 17.90 | 0.8 |
| 20.36 | 3.7 |
| 21.15 | 1.5 |
| 22.85 | 1.0 |
| 23.34 | 2.1 |
| 23.99 | 8.2 |
| 24.83 | 8.8 |
| 25.40 | 4.6 |
| 26.18 | 1.6 |
| 26.62 | 2.7 |
| 26.97 | 2.2 |
| 27.69 | 1.2 |
| 28.42 | 0.6 |
| 28.94 | 0.7 |
| 29.75 | 0.6 |

### Example 2: Preparation of RUB-37 isomorphously substituted with titanium

The Ti-RUB-36 material obtained according to Example 1 was subjected to calcinations in air. Calcination temperature was 500 °C, and this temperature was adjusted by heating the silicate with a heating ramp of 1 °C/min. The temperature of 500 °C was maintained for 5 h.

**Table 2: X-ray diffraction pattern of Ti-RUB-37**

| Diffraction angle 2θ/° [Cu K(alpha 1)] | Intensity (%) |
|---|---|
| 9.70 | 100.0 |
| 12.95 | 4.0 |
| 14.50 | 0.8 |
| 16.15 | 1.1 |
| 18.29 | 0.7 |
| 18.90 | 0.9 |
| 19.40 | 4.3 |
| 19.98 | 3.0 |
| 20.45 | 5.4 |
| 21.69 | 1.5 |
| 22.91 | 2.9 |
| 23.33 | 4.1 |
| 24.18 | 1.2 |
| 26.03 | 4.3 |
| 26.95 | 2.7 |
| 27.16 | 3.9 |
| 27.50 | 3.1 |
| 27.85 | 1.8 |
| 29.15 | 1.1 |

### Example 3: Preparation of RUB-36 isomorphously substituted with boron

5.434 g of aqueous diethyldimethylammonium hydroxide (21.9 wt.-%) solution were weighed into a beaker, to which 1.2 g of fumed silica were added in portions and the mixture was stirred for 30 min. 0.036 g of RUB-36 was then added as seed crystals and the mixture was then stirred for 1 h, after which 0.024 g of boric acid was added to the mixture. The resulting suspension was then transferred to a pressure digestion vessel and then heated therein under hydrothermal conditions at 140 °C for 8 d (192 h).

The resulting product was then suction filtered, washed with distillated water, and dried at 100 °C for 16 h, affording 0.989 g of product.

## Claims

1. A process for the preparation of an isomorphously substituted RUB-36 layered silicate comprising
(1) providing a mixture containing silica, preferably amorphous silica, and/or at least one silica precursor, water, at least one tetraalkylammonium compound selected from the group consisting of a diethyldimethylammonium compound, a triethylmethyl-ammonium compound, and a mixture of a diethyldimethylammonium and a triethylmethylammonium compound, optionally at least one base,
(2) heating the mixture obtained according to (1) under hydrothermal conditions to give a suspension containing an RUB-36 silicate,
(3) separating and optionally (4) washing and/or (5) drying the RUB-36 silicate from the suspension obtained according to (2),
wherein
(a) the mixture according to (1) contains at least one source of at least one element suitable for isomorphous substitution of at least a portion of the Si atoms in the silicate.

2. The process of claim 1, wherein
(b) the separated and optionally washed and/or dried RUB-36 silicate according to (3) is post-treated, thereby isomorphously substituting at least a portion of the Si atoms in the silicate with at least one element suitable for isomorphous substitution.

3. The process of claim 1 or 2, wherein the at least one element suitable for isomorphous substitution is selected from the group consisting of Al, B, Fe, Ti, Sn, Ga, Ge, Zr, V, Nb and a mixture of two or more thereof, preferably from the group consisting of Ti, Al, B and a mixture of two or more thereof.

4. The process of any of claims 1 to 3, wherein the aqueous mixture employed according to (1) contains diethyldimethylammonium hydroxide, triethyl-methylammonium hydroxide, or a mixture of diethyldimethylammonium hydroxide and triethylmethylammonium hydroxide, preferably diethyl-dimethylammonium hydroxide.

5. The process of any of claims 1 to 4, wherein amorphous silica is employed according to (1).

6. The process of any of claims 1 to 5, wherein the mixture obtained according to (1) contains SiO₂, or the silica precursor calculated as SiO₂, the at least one tetraalkylammonium compound and water in the molar ratios SiO₂: tetraalkylammonium compound: water of 1 : (0.45-0.55): (0.5-20), preferably 1: (0.49-0.51): (1-16).

7. The process of any of claims 1 to 6, wherein the mixture obtained according to (1) contains at least one suitable seeding material, preferably RUB-36 seed crystals, more preferably all-silica RUB-36 seed crystals.

8. The process of claim 7, wherein the mixture obtained according to (1) contains SiO₂ and/or the silica precursor calculated as SiO₂, and the seed material in a weight ratio of 1 : (0.01-0.2), preferably of 1 : (0.02-0.1).

9. The process of any of claims 1 to 8, wherein the mixture is heated according to (2) for a period in the range of from 1 to 18 days, preferably from 7 to 15 days.

10. The process of any of claims 1 to 9, wherein the mixture is heated according to (2) to a temperature in the range of from 135 to 145 °C.

11. The process of any of claims 1 to 10, additionally comprising
(4) washing, preferably to a pH in the range of from 6.5 to 7.5, of the separated silicate, and/or
(5) drying, preferably at a temperature in the range of from 75 to 125 °C, of the separated and optionally washed silicate.

12. The process of any of claims 1 to 11, wherein the molar ratios of SiO₂ and/or the silica precursor calculated as SiO₂, in the reaction mixture according to (1) and the at least one element suitable for isomorphous substitution (1) is 1 : (0.0001- 0.1), preferably 1: (0.001- 0.05), more preferably 1: (0.005 - 0.02).

13. The process of claim 12, wherein the aqueous mixture employed according to (1) additionally contains hydrogen peroxide.

14. The process of claim 12 or 13, wherein the at least one element suitable for isomorphous substitution is Ti, and wherein the molar ratio of Ti : hydrogen peroxide is in the range of from 0.005 to 0.01.

15. The process of claim 14, wherein the source of Ti is a tetraalkyl-orthotitanate or a mixture of two or more tetraalkylorthotitanate, preferably tetrabutylorthotitanate.

16. The process of any of claims 2 to 15, wherein the post-treatment is conducted directly after separating and optional washing and/or drying.

17. The process of any of claims 1 to 16, additionally comprising
(6) calcining the silicate obtained according to (3) or (4) or (5), preferably at a temperature in the range of from 300 to 700 °C, preferably in the range of from 400 to 600 °C.

18. An isomorphously substituted RUB-36 silicate obtainable by a process according to any of claims 1 to 16.

19. An RUB-36 silicate, wherein at least a portion of the Si atoms in the silicate is isomorphously substituted by at least one suitable element.

20. The silicate of claim 18 or 19, wherein the at least one suitable element is selected from the group consisting of Al, B, Fe, Ti, Sn, Ga, Ge, Zr, V, Nb and a mixture of two or more thereof, preferably from the group consisting of Ti, Al, B and a mixture of two or more thereof.

21. The RUB-36 silicate of any of claims 18 to 20, wherein the atomic ratio of Si: suitable element, preferably Ti or Al or B in the layered silicate is in the range of 1: (0.0001-0.1), preferably 1 : (0.001- 0.05), more preferably 1 : (0.005 - 0.02).

22. The silicate of any of claims 18 to 21, having an X-ray diffraction pattern comprising at least the following reflections:
| Diffraction angle 2θ/° [Cu K(alpha 1)] | Intensity (%) |
|---|---|
| 7.85 - 8.05 | 100.0 |
| 17.04 - 17.24 | 1.6 - 5.6 |
| 20.26 - 20.46 | 1.7 - 5.7 |
| 23.89 - 24.09 | 4.2 - 12.2 |
| 24.73 - 24.93 | 4.8 - 12.8 |
| 25.30 - 25.50 | 2.6 - 6.6 |
| 26.52 - 26.72 | 0.7 - 4.7 |
wherein 100% relates to the intensity of the maximum peak in the X-ray diffraction pattern.

23. An isomorphously substituted RUB-37 silicate obtainable by a process according to claim 17.

24. An RUB-37 silicate, wherein at least a portion of the Si atoms in the silicate is isomorphously substituted by at least one suitable element, said at least one suitable element preferably being selected from the group consisting of Al, B, Fe, Ti, Sn, Ga, Ge, Zr, V, Nb and a mixture of two ore more thereof, more preferably from the group consisting Ti, Al, B and a mixture of two or more thereof.

25. The RUB-37 silicate of claim 23 or 24, wherein the atomic ratio of Si: suitable element, preferably Ti or Al or B in the layered silicate is in the range of 1 : (0.0001- 0.1), preferably 1: (0.001- 0.05), more preferably 1: (0.005 - 0.02).

26. The silicate of any of claims 23 to 25, having an X-ray diffraction pattern comprising at least the following reflections:
| Diffraction angle 2θ/° [Cu K(alpha 1)] | Intensity (%) |
|---|---|
| 9.60 - 9.70 | 100.0 |
| 12.85 - 13.05 | 0.5-10 |
| 19.30 - 19.50 | 0.5-10 |
| 20.35 - 20.55 | 1 - 11 |
| 23.23 - 23.43 | 0.5 - 10 |
| 25.93 - 26.13 | 0.5-10 |
| 27.06 - 27.26 | 0.5 - 10 |
wherein 100% relates to the intensity of the maximum peak in the X-ray diffraction pattern.

27. The silicate of any one of claims 23 to 26, having a BET surface area in the range of from 150 to 500 m²/g, determined according to DIN 66135, more preferably of from 200 to 400 m²/g, more preferably of from 250 to 350 m²/g.

28. A molding comprising the silicate of any one of claims 18 to 27.

29. Use of silicate according to any one of claims 18 to 28 as a molecular sieve, catalyst, catalyst support or binder thereof, as an adsorbent, pigment, additive in detergents, additive for building materials, for imparting thixotropic properties to coating pastes and finishes, as external and internal lubricant, as a flameproofing agent, auxiliary agent and filler in paper products, in bactericidal and/or fungicidal and/or herbicidal compositions, for ion exchange, for the production of ceramics, in polymers, in electrical, optical or electrooptical components and switching elements or sensors.

## Patentansprüche

1. Verfahren zur Herstellung eines isomorph substituierten RUB-36-Schichtsilikats, umfassend
(1) Bereitstellen einer Mischung, die Siliciumdioxid, vorzugsweise amorphes Siliciumdioxid, und/oder mindestens eine Siliciumdioxid-Vorstufe, Wasser, mindestens eine Tetraalkylammoniumverbindung aus der Gruppe bestehend aus einer Diethyldimethylammoniumverbindung, einer Triethylmethylammoniumverbindung und einer Mischung einer Diethyldimethylammoniumverbindung und einer Triethylmethylammoniumverbindung und gegebenenfalls mindestens eine Base enthält;
(2) Erhitzen der gemäß (1) erhaltenen Mischung unter hydrothermalen Bedingungen zum Erhalt einer ein RUB-36-Silikat enthaltenden Suspension,
(3) Abtrennen und gegebenenfalls (4) Waschen und/oder (5) Trocknen des RUB-36-Silikats aus der gemäß (2) erhaltenen Suspension,
wobei
(a) die Mischung gemäß (1) mindestens eine Quelle mindestens eines zur isomorphen Substitution mindestens eines Teils der Si-Atome in dem Silikat geeigneten Elements enthält.

2. Verfahren nach Anspruch 1, bei dem
(b) das abgetrennte und gegebenenfalls gewaschene und/oder getrocknete RUB-36-Silikat gemäß (3) nachbehandelt wird, wodurch mindestens ein Teil der Si-Atome in dem Silikat durch mindestens ein zur isomorphen Substitution geeignetes Element ersetzt wird.

3. Verfahren nach Anspruch 1 oder 2, bei dem das mindestens eine zur isomorphen Substitution geeignete Element aus der Gruppe bestehend aus Al, B, Fe, Ti, Sn, Ga, Ge, Zr, V, Nb und einer Mischung von zwei oder mehr davon, vorzugsweise aus der Gruppe bestehend aus Ti, Al, B und einer Mischung von zwei oder mehr davon, ausgewählt wird.

4. Verfahren nach einem der Ansprüche 1 bis 3, bei dem die gemäß (1) eingesetzte wässrige Mischung Diethyldimethylammoniumhydroxid, Triethylmethyl-ammoniumhydroxid oder eine Mischung von Diethyldimethylammoniumhydroxid und Triethylmethyl-ammoniumhydroxid, vorzugsweise Diethyldimethyl-ammoniumhydroxid, enthält.

5. Verfahren nach einem der Ansprüche 1 bis 4, bei dem gemäß (1) amorphes Siliciumdioxid eingesetzt wird.

6. Verfahren nach einem der Ansprüche 1 bis 5, bei dem die gemäß (1) erhaltene Mischung SiO₂ oder die Siliciumdioxid-Vorstufe, berechnet als SiO₂, die mindestens eine Tetraalkylammoniumverbindung und Wasser in den Molverhältnissen SiO₂: Tetraalkyl-ammoniumverbindung: Wasser von 1: (0,45-0,55): (0,5-20), vorzugsweise 1: (0,49-0,51): (1-16), enthält.

7. Verfahren nach einem der Ansprüche 1 bis 6, bei dem die gemäß (1) erhaltene Mischung mindestens ein geeignetes Impfmaterial, vorzugsweise RUB-36-Impfkristalle, weiter bevorzugt Impfkristalle aus rein silikatischem RUB-36, enthält.

8. Verfahren nach Anspruch 7, wobei die gemäß (1) erhaltene Mischung SiO₂ und/oder die Siliciumdioxid-Vorstufe, berechnet als SiO₂, und das Impfmaterial in einem Gewichtsverhältnis von 1 : (0,01-0,2), vorzugsweise 1: (0,02-0,1), enthält.

9. Verfahren nach einem der Ansprüche 1 bis 8, bei dem man die Mischung gemäß (2) über einen Zeitraum im Bereich von 1 bis 18 Tagen, vorzugsweise 7 bis 15 Tagen, erhitzt.

10. Verfahren nach einem der Ansprüche 1 bis 9, bei dem man die Mischung gemäß (2) auf eine Temperatur im Bereich von 135 bis 145°C erhitzt.

11. Verfahren nach einem der Ansprüche 1 bis 10, zusätzlich umfassend
(4) Waschen des abgetrennten Silikats, vorzugsweise bis zu einem pH-Wert im Bereich von 6,5 bis 7,5, und/oder
(5) Trocknen des abgetrennten und gegebenenfalls gewaschenen Silikats, vorzugsweise bei einer Temperatur im Bereich von 75 bis 125°C.

12. Verfahren nach einem der Ansprüche 1 bis 11, bei dem das Molverhältnis von SiO₂ und/oder der Siliciumdioxid-Vorstufe, berechnet als SiO₂, in der Reaktionsmischung gemäß (1) und dem mindestens einen zur isomorphen Substitution geeigneten Element (1) 1: (0,0001-0,1), vorzugsweise 1: (0,001-0,05), weiter bevorzugt 1: (0,005-0,02), beträgt.

13. Verfahren nach Anspruch 12, bei dem die gemäß (1) eingesetzte wässrige Mischung zusätzlich Wasserstoffperoxid enthält.

14. Verfahren nach Anspruch 12 oder 13, bei dem es sich bei dem mindestens einen zur isomorphen Substitution geeigneten Element um Ti handelt und wobei das Molverhältnis von Ti: Wasserstoffperoxid im Bereich von 0,005 bis 0,01 liegt.

15. Verfahren nach Anspruch 14, bei dem es sich bei der Ti-Quelle um Tetraalkylorthotitanat oder eine Mischung von zwei oder mehr Tetraalkylorthotitanaten, vorzugsweise Tetrabutylorthotitanat, handelt.

16. Verfahren nach einem der Ansprüche 2 bis 15, bei dem die Nachbehandlung direkt nach dem Abtrennen und fakultativen Waschen und/oder Trocknen durchgeführt wird.

17. Verfahren nach einem der Ansprüche 1 bis 16, zusätzlich umfassend
(6) Calcinieren des gemäß (3) oder (4) oder (5) erhaltenen Silikats, vorzugsweise bei einer Temperatur im Bereich von 300 bis 700°C, weiter bevorzugt im Bereich von 400 bis 600°C.

18. Isomorph substituiertes RUB-36-Silikat, das durch ein Verfahren nach einem der Ansprüche 1 bis 16 erhältlich ist.

19. RUB-36-Silikat, worin mindestens ein Teil der Si-Atome in dem Silikat durch mindestens ein geeignetes Element isomorph ersetzt ist.

20. Silikat nach Anspruch 18 oder 19, wobei das mindestens eine geeignete Element aus der Gruppe bestehend aus Al, B, Fe, Ti, Sn, Ga, Ge, Zr, V, Nb und einer Mischung von zwei oder mehr davon, vorzugsweise aus der Gruppe bestehend aus Ti, Al, B und einer Mischung von zwei oder mehr davon, ausgewählt ist.

21. RUB-36-Silikat nach einem der Ansprüche 18 bis 20, wobei das Atomverhältnis von Si: geeignetem Element, vorzugsweise Ti oder Al oder B, in dem Schichtsilikat im Bereich von 1: (0,0001-0,1), vorzugsweise 1: (0,001-0,05), weiter bevorzugt 1 : (0,005-0,02), liegt.

22. Silikat nach einem der Ansprüche 18 bis 21 mit einem Röntgenbeugungsmuster, das mindestens die folgenden Reflexe umfasst:
| Beugungswinkel 2 Theta/° [Cu K(alpha 1)] | Intensität (%) |
|---|---|
| 7,85-8,05 | 100,0 |
| 17,04-17,24 | 1,6-5,6 |
| 20,26-20,46 | 1,7-5,7 |
| 23,89-24,09 | 4,2-12,2 |
| 24,73-24,93 | 4,8-12,8 |
| 25,30-25,50 | 2,6-6,6 |
| 26,52-26,72 | 0,7-4,7 |
wobei sich die Angabe 100% auf die Intensität des höchsten Peaks im Röntgenbeugungsmuster bezieht.

23. Isomorph substituiertes RUB-37-Silikat, das durch ein Verfahren nach Anspruch 17 erhältlich ist.

24. RUB-37-Silikat, worin mindestens ein Teil der Si-Atome in dem Silikat durch mindestens ein geeignetes Element isomorph ersetzt ist, wobei das mindestens eine geeignete Element vorzugsweise aus der Gruppe bestehend aus Al, B, Fe, Ti, Sn, Ga, Ge, Zr, V, Nb und einer Mischung von zwei oder mehr davon, weiter bevorzugt aus der Gruppe bestehend aus Ti, Al, B und einer Mischung von zwei oder mehr davon, ausgewählt ist.

25. RUB-37-Silikat nach einem Anspruch 23 oder 24, wobei das Atomverhältnis von Si: geeignetem Element, vorzugsweise Ti oder Al oder B, in dem Schichtsilikat im Bereich von 1: (0,0001-0,1), vorzugsweise 1: (0,001-0,05), weiter bevorzugt 1 : (0,005-0,02), liegt.

26. Silikat nach einem der Ansprüche 23 bis 25 mit einem Röntgenbeugungsmuster, das mindestens die folgenden Reflexe umfasst:
| Beugungswinkel 2 Theta/° [Cu K(alpha 1)] | Intensität (%) |
|---|---|
| 9,60-9,70 | 100,0 |
| 12,85-13,05 | 0,5-10 |
| 19,30-19,50 | 0,5-10 |
| 20,35-20,55 | 1-11 |
| 23,23-23,43 | 0,5-10 |
| 25,93-26,13 | 0,5-10 |
| 27,06-27,26 | 0,5-10 |
wobei sich die Angabe 100% auf die Intensität des höchsten Peaks im Röntgenbeugungsmuster bezieht.

27. Silikat nach einem der Ansprüche 23 bis 26 mit einer gemäß DIN 66135 bestimmten BET-Oberfläche im Bereich von 150 bis 500 m²/g, weiter bevorzugt 200 bis 400 m²/g, weiter bevorzugt 250 bis 350 m²/g.

28. Formteil, umfassend das Silikat nach einem der Ansprüche 18 bis 27.

29. Verwendung von Silikat nach einem der Ansprüche 18 bis 28 als Molsieb, Katalysator, Katalysatorträger oder Bindemittel dafür, als Adsorptionsmittel, Pigment, Zusatzstoff in Waschmitteln, Zusatz zu Baustoffen, zur Thioxotropierung in Farbpasten und Lacken, als Gleit- und Schmierstoff, als Flammschutz, Hilfs- und Füllstoff in Papiererzeugnissen, in bakterizid und/oder fungizid und/oder herbizid wirksamen Zusammensetzungen, zum lonenaustausch, zur Herstellung von Keramiken, in Polymeren, in elektrischen, optischen oder elektrooptischen Bauteilen und Schaltelementen oder Sensoren.

## Revendications

1. Procédé de préparation d'un phyllosilicate RUB-36 substitué de façon isomorphe comprenant les étapes consistant à
(1) se procurer un mélange contenant de la silice, de préférence de la silice amorphe et/ou au moins un précurseur de silice, de l'eau, au moins un composé tétraalkylammonium choisi dans le groupe constitué par un composé diéthyldiméthylammonium, un composé triéthylméthylammonium et un mélange d'un composé diéthyldiméthylammonium et d'un composé triéthylméthylammonium, éventuellement au moins une base,
(2) chauffer le mélange obtenu selon (1) dans des conditions hydrothermales pour obtenir une suspension contenant un silicate RUB-36,
(3) séparer et éventuellement (4) laver et/ou (5) sécher le silicate RUB-36 à partir de la suspension obtenue selon (2),
dans lequel
(a) le mélange selon (1) contient au moins une source d'au moins un élément convenable pour la substitution isomorphe d'au moins une partie des atomes de Si dans le silicate.

2. Procédé selon la revendication 1, dans lequel (b) le silicate RUB-36 séparé et éventuellement lavé et/ou séché selon (3) est post-traité, ce qui permet d'effectuer la substitution isomorphe d'au moins une partie des atomes de Si dans le silicate par au moins un élément convenable pour la substitution isomorphe.

3. Procédé selon la revendication 1 ou 2, dans lequel le au moins un élément convenable pour la substitution isomorphe est choisi dans le groupe constitué par Al, B, Fe, Ti, Sn, Ga, Ge, Zr, V, Nb et un mélange de deux ou plus d'entre eux, de préférence dans le groupe constitué par Ti, Al, B et un mélange de deux ou plus d'entre eux.

4. Procédé selon l'une quelconque des revendications 1 à 3, dans lequel le mélange aqueux employé selon (1) contient de l'hydroxyde de diéthyldiméthylammonium, de l'hydroxyde de triéthylméthylammonium, ou un mélange d'hydroxyde de diéthyldiméthylammonium et d'hydroxyde de triéthylméthylammonium, de préférence de l'hydroxyde de diéthyldiméthylammonium.

5. Procédé selon l'une quelconque des revendications 1 à 4, dans lequel de la silice amorphe est employée selon (1).

6. Procédé selon l'une quelconque des revendications 1 à 5, dans lequel le mélange obtenu selon (1) contient SiO₂, ou le précurseur de silice calculé en SiO₂, le au moins un composé tétraalkylammonium et l'eau dans les rapports molaires SiO₂: composé tétraalkylammonium: eau de 1 : (0,45-0,55) : (0,5-20), de préférence de 1 : (0,49-0,51) : (1-16).

7. Procédé selon l'une quelconque des revendications 1 à 6, dans lequel le mélange obtenu selon (1) contient au moins un matériau de germe convenable, de préférence des germes cristallins de RUB-36, de façon plus préférée des germes cristallins de RUB-36 tout en silice.

8. Procédé selon la revendication 7, dans lequel le mélange obtenu selon (1) contient SiO₂ et/ou le précurseur de silice calculé en SiO₂, et le matériau de germe dans un rapport pondéral de 1 : (0,01-0,2), de préférence de 1 : (0,02-0,1).

9. Procédé selon l'une quelconque des revendications 1 à 8, dans lequel le mélange est chauffé selon (2) pendant une durée dans la fourchette de 1 à 18 jours, de préférence de 7 à 15 jours.

10. Procédé selon l'une quelconque des revendications 1 à 9, dans lequel le mélange est chauffé selon (2) à une température dans la fourchette de 135 à 145 °C.

11. Procédé selon l'une quelconque des revendications 1 à 10, comprenant en plus l'étape consistant à
(4) laver, de préférence à un pH dans le domaine de 6,5 à 7,5, le silicate séparé, et/ou
(5) sécher, de préférence à une température dans la fourchette de 75 à 125 °C, le silicate séparé et éventuellement lavé.

12. Procédé selon l'une quelconque des revendications 1 à 11, dans lequel les rapports molaires entre SiO₂ et/ou le précurseur de silice calculé en SiO₂, dans le mélange réactionnel selon (1), et le au moins un élément convenable pour la substitution isomorphe (1) est de 1 : (0,0001 - 0,1), de préférence de 1 : (0,001-0,05), de façon plus préférée de 1 : (0,005 - 0,02).

13. Procédé selon la revendication 12, dans lequel le mélange aqueux employé selon (1) contient en plus du peroxyde d'hydrogène.

14. Procédé selon la revendication 12 ou 13, dans lequel le au moins un élément convenable pour la substitution isomorphe est Ti, et dans lequel le rapport molaire Ti : peroxyde d'hydrogène est dans la fourchette de 0,005 à 0,01.

15. Procédé selon la revendication 14, dans lequel la source de Ti est un ortho-titanate de tétraalkyle ou un mélange de deux ou plus de deux ortho-titanates de tétraalkyle, de préférence de l'ortho-titanate de tétrabutyle.

16. Procédé selon l'une quelconque des revendications 2 à 15, dans lequel le post-traitement est effectué directement après la séparation et l'éventuel lavage et/ou séchage.

17. Procédé selon l'une quelconque des revendications 1 à 16, comprenant en plus l'étape consistant à (6) calciner le silicate obtenu selon (3) ou (4) ou (5), de préférence à une température dans la fourchette de 300 à 700 °C, de préférence dans la fourchette de 400 à 600 °C.

18. Silicate RUB-36 substitué de façon isomorphe susceptible d'être obtenu par un procédé selon l'une quelconque des revendications 1 à 16.

19. Silicate RUB-36, dans lequel au moins une partie des atomes de Si dans le silicate est substituée de façon isomorphe par au moins un élément convenable.

20. Silicate selon la revendication 18 ou 19, dans lequel le au moins un élément convenable est choisi dans le groupe constitué par Al, B, Fe, Ti, Sn, Ga, Ge, Zr, V, Nb et un mélange de deux ou plus d'entre eux, de préférence dans le groupe constitué par Ti, Al, B et un mélange de deux ou plus d'entre eux.

21. Silicate RUB-36 selon l'une quelconque des revendications 18 à 20, dans lequel le rapport atomique Si : élément convenable, de préférence Ti ou Al ou B dans le phyllosilicate, est dans la fourchette de 1 : (0,0001-0,1), de préférence de 1 : (0,001 - 0,05), de façon plus préférée de 1 : (0,005 - 0,02).

22. Silicate selon l'une quelconque des revendications 18 à 21, ayant un diagramme de diffraction X comprenant au moins les réflexions suivantes :
| Angle de diffraction 2θ/° [K(alpha 1) de Cu] | Intensité (%) |
|---|---|
| 7,85 - 8,05 | 100,0 |
| 17,04 - 17,24 | 1,6 - 5,6 |
| 20,26 - 20,46 | 1,7 - 5,7 |
| 23,89 - 24,09 | 4,2 - 12,2 |
| 24,73 - 24,93 | 4,8 - 12,8 |
| 25,30 - 25,50 | 2,6 - 6,6 |
| 26,52 - 26,72 | 0,7 - 4,7 |
où 100% désigne l'intensité du pic maximum dans le diagramme de diffraction X.

23. Silicate RUB-37 substitué de façon isomorphe susceptible d'être obtenu par un procédé selon la revendication 17.

24. Silicate RUB-37, dans lequel au moins une partie des atomes de Si dans le silicate est substituée de façon isomorphe par au moins un élément convenable, ledit au moins un élément convenable étant de préférence choisi dans le groupe constitué par Al, B, Fe, Ti, Sn, Ga, Ge, Zr, V, Nb et un mélange de deux ou plus d'entre eux, de façon plus préférée dans le groupe constitué par Ti, Al, B et un mélange de deux ou plus d'entre eux.

25. Silicate RUB-37 selon la revendication 23 ou 24, dans lequel le rapport atomique Si : élément convenable, de préférence Ti ou Al ou B, dans le phyllosilicate est dans la fourchette de 1 : (0,0001 - 0,1), de préférence de 1 : (0,001 - 0,05), de façon plus préférée de 1 : (0,005 - 0,02).

26. Silicate selon l'une quelconque des revendications 23 à 25, ayant un diagramme de diffraction X comprenant au moins les réflexions suivantes :
| Angle de diffraction 2θ/° [K(alpha 1) de Cu] | Intensité (%) |
|---|---|
| 9,60 - 9,70 | 100,0 |
| 12,85 - 13,05 | 0,5 - 10 |
| 19,30 - 19,50 | 0,5 - 10 |
| 20,35 - 20,55 | 1 - 11 |
| 23,23 - 23,43 | 0,5 - 10 |
| 25,93 - 26,13 | 0,5 - 10 |
| 27,06 - 27,26 | 0,5 - 10 |
où 100% désigne l'intensité du pic maximum dans le diagramme de diffraction X.

27. Silicate selon l'une quelconque des revendications 23 à 26, ayant une surface spécifique BET dans la fourchette de 150 à 500 m²/g, déterminée selon DIN 66135, de façon plus préférée de 200 à 400 m²/g, de façon plus préférée de 250 à 350 m²/g.

28. Moulage comprenant le silicate selon l'une quelconque des revendications 18 à 27.

29. Utilisation du silicate selon l'une quelconque des revendications 18 à 28 en tant que tamis moléculaire, catalyseur, support de catalyseur ou liant pour ce dernier, en tant qu'adsorbant, pigment, additif dans les détergents, additif pour matériaux de construction, pour conférer des propriétés thixotropes à des pâtes et finitions de revêtement, en tant que lubrifiant externe et interne, en tant qu'agent ignifugeant, agent auxiliaire et charge dans les produits en papier, dans les compositions bactéricides et/ou fongicides et/ou herbicides, pour l'échange d'ions, la production de céramiques, dans les polymères, dans les composants électriques, optiques ou électrooptiques et les éléments de commutation ou les sondes.
